# EUROPÄISCHE PATENTSCHRIFT

(11) **EP 3 358 235 B1**
(45) Veröffentlichungstag und Bekanntmachung des Hinweises auf die Patenterteilung: **07.06.2023**
(21) Anmeldenummer: 18154246.5
(22) Anmeldetag: 30.01.2018
(51) Int. Cl.: F16L 5/02, F16L 5/10

(54) **DICHTELEMENT ZUM ABDICHTEN EINER GEBÄUDESTRUKTUR**
SEALING ELEMENT FOR SEALING A BUILDING STRUCTURE
ÉLÉMENT D'ÉTANCHÉITÉ DESTINÉ À ÉTANCHÉIFIER UNE STRUCTURE DE BÂTIMENT

(30) Priorität: 02.02.2017 DE 202017000552 U
(43) Veröffentlichungstag der Anmeldung: 08.08.2018
(73) Patentinhaber: Watermann Polyworks GmbH, 32758 Detmold (DE)
(72) Erfinder: Watermann, Markus, 32805 Horn-Bad Meinberg (DE)
(74) Vertreter: Freischem & Partner Patentanwälte mbB

(56) Entgegenhaltungen:
- EP-A1- 0 424 309
- EP-A1- 2 169 289
- WO-A1-2013/054206
- US-A1- 2006 006 562
- US-A1- 2014 077 461
- US-A1- 2014 260 044

## Beschreibung

Die Erfindung betrifft ein Dichtelement zum Abdichten einer Gebäudestruktur sowie eine Gebäudestruktur mit einem solchen Dichtelement.

Gebäudestrukturen, wie Wände aber auch Fußböden oder Decken, müssen regelmäßig gegen das Eindringen in, Austreten aus oder Durchdringen der Gebäudestruktur durch Feuchtigkeit abgedichtet werden. Hierfür kommen regelmäßig flächige Dichtelemente zum Einsatz, die auf der Gebäudestruktur angebracht oder in die Gebäudestruktur eingebracht werden. Dies ist in der Regel unproblematisch, solange die Dichtelemente eine durchgehende Schicht im Aufbau der Gebäudestruktur darstellen können. Derartige Dichtelemente sind regelmäßig zumindest im Wesentlichen flächig ausgebildet, so dass sie in Tiefenrichtung der Gebäudestruktur, beispielsweise in Dickenrichtung der Wand, wenig Bauraum erfordern, andererseits große Flächen der Gebäudestruktur, wie beispielsweise die Oberflächen ganzer Wände, abdichten können.

Schwierigkeiten bereiten dabei regelmäßig solche Stellen der Gebäudestruktur, an denen Bauelemente aus der Gebäudestruktur hervortreten. Diese Bauelemente müssen durch das Dichtelement hindurchgeführt werden. Im Bereich des Durchtritts des Bauelements durch das Dichtelement ergibt sich so typischerweise eine Schwachstelle der Abdichtung, durch die Feuchtigkeit zwischen Dichtelement und Bauelement eindringen kann.

Aus dem Stand der Technik, beispielsweise der DE 10 2010 018 677 A1, sind spezielle Dichtelemente bekannt, welche einen elastischen Dichtbereich aus einem elastischen Werkstoff aufweisen. Der Dichtbereich dient der Anlage an dem aus der Gebäudestruktur hervortretenden Bauelement, welches durch eine Durchführungszone in dem Dichtbereich durch das Dichtelement hindurchgeführt wird. Hierbei entsteht eine Gebäudestruktur mit einem aus der Wand hervortretenden Bauelement, welches durch ein Dichtelement geführt ist, bei der das Dichtelement umfangsseitig an der Oberfläche des Bauelements anliegt. Das Dichtelement wird dabei durch das Bauelement elastisch verformt. Durch seine elastische Reaktionskraft wird das Dichtelement an die Oberfläche des Bauteils angedrückt.

Durch dieses, durch die elastischen Reaktionskräfte verursachte Andrücken des Dichtbereichs an die Oberfläche des Bauelements wird eine verbesserte Abdichtung erzielt. Es hat sich jedoch in der Praxis gezeigt, dass die elastischen Reaktionskräfte, welche bei derartigen Dichtelementen den Dichtbereich an die Oberfläche des Bauelements andrücken, häufig nicht ausreichen, um eine hinreichende Abdichtung zu gewährleisten.

Aus der US 2014/12/0044 A1 und der WO 2014/260044 A1 sind Dichtelemente bekannt, welche an dem inneren Rand ihres Dichtbereichs einen verdickten Bereich aufweisen. Die Verdickung erhöht zwar die Reaktionskräfte, jedoch am inneren Rand des Dichtbereichs, der ohnehin die stärkste elastische Verformung erfährt und somit die stärksten Reaktionskräfte erfährt. Der Mehrwert der Verdickung für die Dichtwirkung ist daher begrenzt. Weitere Dichtelemente sind aus der EP 2 169 289 A1, der EP 0 424 309 A1, der US 2014/077461 A1 und der US 2006/006562 bekannt.

Der Erfindung liegt daher die Aufgabe zugrunde, ein Dichtelement zum Abdichten einer Gebäudestruktur und eine Gebäudestruktur mit einem solchen Dichtelement zur Verfügung zu stellen, bei denen eine bessere Abdichtung zwischen dem Dichtelement und einem aus der Gebäudestruktur hervortretenden Bauteil gegeben ist.

Die Aufgabe wird gelöst durch ein Dichtelement und eine Gebäudestruktur mit den Merkmalen des unabhängigen Anspruchs 1. Die Merkmale der abhängigen Ansprüche betreffen vorteilhafte Ausführungsformen.

Der Dichtbereich weist einen verdickten Bereich auf, der die Durchführungszone umgibt. Dieser verdickte Bereich bewirkt bei gleicher Verformung eine höhere elastische Reaktionskraft als ein herkömmlicher Dichtbereich ohne eine erfindungsgemäße Verdickung. Bei ansonsten gleicher Geometrie von Dichtelement und Bauelement wird so ein durch die Durchführungszone des Dichtelements geführtes Bauelement eine stärkere elastische Reaktionskraft im Dichtelement verursachen, was darauf zurückzuführen ist, dass zumindest ein Teil dieser elastischen Reaktionskraft auf der elastischen Verformung des verdickten Bereichs beruht. Durch diese verstärkte elastische Reaktionskraft und die daraus resultierenden stärkeren Andruckkräfte des Dichtbereichs an das Bauelement wird eine bessere Abdichtung zwischen Bauelement und Dichtelement erzielt.

Vorzugsweise ist die Durchführungszone des Dichtbereichs als insbesondere kreisrunde Öffnung gestaltet. Es sind aber auch andere Gestaltungen denkbar, beispielsweise in Gestalt einer lokalen Schwächung in Gestalt einer Perforation oder ähnliches, welche ein Durchführen des Bauelements durch den Dichtbereich des Dichtelements erleichtern bzw. ermöglichen. In der einfachsten Ausführung handelt es sich lediglich um die Zone des Dichtelements, die für die Durchführung des Bauelements bestimmt ist. Bei einer solchen Gestaltung kann dann die Durchführung des Bauelements durch die Durchführungszone beispielsweise derart bewirkt werden, dass vor Ort eine entsprechende Öffnung in das Dichtelement geschnitten wird.

Bevorzugt weist der elastische Werkstoff eine Shore A Härte von wenigstens 35 und/oder höchstens 85 auf. Es hat sich gezeigt, dass elastische Werkstoffe, insbesondere Kunststoffe, deren Shore A Härte in diesem Bereich liegt, ein elastisches Verformungsverhalten aufweisen, welches vorteilhaft für das Entstehen der für die Abdichtung des Dichtelements am Bauelement verantwortlichen elastischen Reaktionskräfte ist.

Besonders bevorzugt ist der elastische Werkstoff ein Elastomer. Elastomere sind insbesondere Kunststoffe mit einer gummielastischen Verformbarkeit, welche sich positiv auf die Erzeugung der für die Abdichtung notwendigen elastischen Reaktionskräfte auswirkt. Darüber hinaus weisen derartige Kunststoffe eine hohe Dichtwirkung gegen Feuchtigkeit auf.

Besonders bevorzugt ist der elastische Werkstoff ein thermoplastischer Werkstoff, insbesondere ein thermoplastischer Kunststoff. Diese Werkstoffe haben den Vorteil, unter Wärmeeinwirkung plastisch verformbar zu werden, was eine kostengünstige Herstellbarkeit des Dichtelements zur Folge hat.

Vorteilhafterweise ist der Dichtbereich des Dichtelements in einem Spritzgussverfahren hergestellt. Spritzgussverfahren erlauben es, die verdickten Bereiche durch den Einsatz entsprechender Formen vergleichsweise einfach und kostengünstig zu erzeugen. Dies kann beispielsweise geschehen, indem in einem ansonsten lediglich flächig gestalteten Spritzgusswerkzeug eine Nut als Negativabdruck des zu erzeugenden verdickten Bereichs eingebracht wird. Auf diese Weise können die Spritzgusswerkzeuge geometrisch einfach und damit vergleichsweise kostengünstig gestaltet werden.

Der verdickte Bereich ist bevorzugt zumindest im Wesentlichen kreis- oder ringförmig gestaltet: Kreis- oder ringförmige Gestaltungen des verdickten Bereiches ermöglichen es, eine gut dichtende Anlage des Dichtbereichs an der Oberfläche eines Bauelements mit einem entsprechenden runden Querschnitt zu ermöglichen, insbesondere Rohre und Kabel können auf diese Weise besonders vorteilhaft durch das Dichtelement hindurchgeführt werden. Es versteht sich, dass auch andere Gestaltungen denkbar sind, um die Durchführung eines Bauelements mit einem anderen, beispielsweise einem rechteckigen Querschnitt, wie beispielsweise eines Kabelkanals, zu ermöglichen.

Vorteilhafterweise ist der Dichtbereich von einem weiteren flächigen Bereich des Dichtelements umgeben. Dies ermöglicht es, lediglich den Dichtbereich aus dem elastischen Werkstoff des Dichtbereichs auszuführen, so dass dieser lediglich den unmittelbaren Bereich um das aus der Gebäudestruktur hervortretende Bauelement abdichtet. Weiter von dem Ort des Hervortretens des Bauelements entfernt liegende Bereiche der Gebäudestruktur können so mit dem weiteren Bereich abgedichtet werden. Dies ermöglicht es, eine von dem Dichtbereich abweichende Werkstoffauswahl für den weiteren Bereich zu treffen.

Hierdurch lassen sich beispielsweise unterschiedliche Produktionsverfahren für den Dichtbereich und den weiteren Bereich nutzen. So ist es beispielsweise möglich, lediglich einen Dichtbereich mit einer kleinen flächigen Ausdehnung in einem Spritzgussverfahren zu fertigen, was eine kleine Spritzgussform und entsprechend niedrigere Kosten zur Folge hat. Der weitere Bereich kann beispielsweise als bahnförmiges Material hergestellt werden.

Vorteilhafterweise wird der weitere Bereich zunächst durchgängig hergestellt und dann in einem weiteren Schritt eine Ausnehmung, beispielsweise durch Ausschneiden, in den weiteren Bereich eingebracht. Der separat hergestellte Dichtbereich kann dann im Bereich dieser Ausnehmung mit dem weiteren Bereich verbunden werden. Es kann in vorteilhafter Weise eine randseitige Überlappung von Dichtbereich und weiterem Bereich vorgesehen sein, die ein dauerhaftes Verbinden des Dichtbereichs mit dem weiteren Bereich begünstigt. Die Verbindung kann beispielsweise durch ein Verkleben erfolgen.

Der weitere Bereich kann beispielsweise eine Kunststofffolie aufweisen. Derartige Kunststofffolien sind kostengünstig in ihrer Herstellung und als Halbzeuge für die Herstellung des weiteren Bereichs eines erfindungsgemäßen Dichtelements problemlos verfügbar.

Vorteilhafterweise kann es sich bei der Kunststofffolie um eine Polyolefinfolie handeln. Polyolefine, insbesondere Polyethylen oder Polypropylen, weisen vorteilhafte Eigenschaften im Hinblick auf Verfügbarkeit, Kosten und ihr chemisches und physikalisches Verhalten auf.

Von Vorteil ist es, wenn die Kunststofffolie auf ihrer ersten Seite und/oder ihrer zweiten Seite mit einem Haftvermittler beschichtet ist.

Es hat sich überraschenderweise gezeigt, dass die Verwendung eines Haftvermittlers - auch bezeichnet als "Primer" - die Verarbeitbarkeit von Dichtelementen der in Rede stehenden Art wesentlich verbessert, wenn diese mit Bauklebstoffen mit anderen Bestandteilen einer Gebäudestruktur verbunden bzw. an diese angebracht werden.

Vorteilhafterweise handelt es sich bei dem Haftvermittler um einen wasserbasierten Haftvermittler. Zwar sind auch andere Haftvermittler, beispielsweise Haftvermittler auf der Basis von organischen Lösungsmitteln, grundsätzlich für die Ausführung der vorliegenden Erfindung geeignet. Wasserbasierte Haftvermittler weisen jedoch Vorteile hinsichtlich der Umweltverträglichkeit auf.

Als besonders vorteilhaft hat sich im Zusammenhang mit der vorliegenden Erfindung die Verwendung eines Haftvermittlers, der Kieselsäure enthält, gezeigt.

Es ist besonders vorteilhaft, wenn die erste und/oder zweite Seite der Kunststofffolie vor dem Beschichten mit dem Haftvermittler eine Oberflächenbehandlung zur Erhöhung der Polarität erfahren hat. In diesem Zusammenhang hat sich insbesondere als vorteilhaft herausgestellt, wenn die Kunststofffolie einer Koronabehandlung unterzogen worden ist. Grundsätzlich können aber auch andere Formen entsprechender Oberflächenbehandlungen, wie Flammbehandlungen, Fluorierungen oder Plasmabehandlungen eine vorteilhafte Erhöhung der Polarität der Oberfläche der Kunststofffolie im Zusammenhang mit der vorliegenden Erfindung herbeiführen.

Vorteilhafterweise ist der Haftvermittler vollflächig auf die erste und/oder zweite Seite der Kunststofffolie aufgebracht. Ein vollflächiger Auftrag des Haftvermittlers ermöglicht es, die entsprechende Seite der Folie an jeder ihrer Stelle in verwässerter Weise mit einem anderen Element einer Gebäudestruktur zu verbinden.

Vorteilhafterweise kann auf die Kunststofffolie auf ihrer ersten und/oder zweiten Seite eine selbstklebende Beschichtung aufgebracht werden. Auch diese Beschichtung kann bevorzugt vollflächig aber auch teilflächig auf die Kunststofffolie aufgebracht sein. Eine derartige selbstklebende Beschichtung hat den Vorteil, dass das Dichtelement einfach zu verarbeiten ist, da vor Ort keine separaten Bauklebstoffe benötigt werden.

Vorteilhafterweise kann die Kunststofffolie auf ihrer ersten und/oder zweiten Seite ein textiles Flächengebilde aufweisen. Ein solches textiles Flächengebilde schafft eine strukturierte Oberfläche und verbessert so die Verzahnungsmöglichkeiten zwischen der Folie und dem Element der Gebäudestruktur, an dem das erfindungsgemäße Dichtelement befestigt wird. Es kann sich bei dem textilen Flächengebilde um ein Vlies handeln, darüber hinaus ist es möglich, das textile Flächengebilde in vorteilhafter Weise vollflächig auf die Kunststofffolie aufzubringen. Ein teilflächiges Aufbringen des textilen Flächengebildes auf die Kunststofffolie ist jedoch auch möglich.

Vorteilhafterweise weist die Kunststofffolie auf der ersten Seite Vertiefungen auf, deren komplementäre Erhebungen auf der zweiten Seite der Kunststofffolie entsprechen. Eine solche Profilierung der Kunststofffolie ermöglicht es, die Kunststofffolie zu nutzen, um ein Kanalsystem in einer Gebäudestruktur zu erzeugen. Dieses kann beispielsweise der Abfuhr von Feuchtigkeit in der Erstreckungsebene des Dichtelements dienen.

Die Erhebungen weisen vorteilhafterweise die Gestalt von Noppen auf und/oder sind bevorzugt in einem regelmäßigen Raster über die Fläche der Kunststofffolie verteilt.

Besonders vorteilhaft ist, wenn das Dichtelement ein mit der Kunststofffolie verbundenes weiteres Flächengebilde aufweist. Bei diesem kann es sich ebenfalls um ein textiles Flächengebilde, insbesondere ein Vlies, handeln und/oder um ein Flächengebilde, das in vorteilhafter Weise Öffnungen und/oder Poren aufweist. Solche Flächengebilde können so gestaltet werden, dass sie von fluiden Baustoffen bei der Herstellung der Gebäudestruktur durchdrungen, nicht durchdrungen oder nur teilweise durchdrungen werden. Hierdurch ist es möglich, gezielt unterschiedliche Strukturen zu erzielen, insbesondere kann ein teilweise durchdrungenes Flächengebilde eine gute Anbindung zu einer weiteren Gebäudeschicht herstellen, während gleichzeitig ein Kanalsystem zwischen Kunststofffolie und weiterem Flächengebilde ausgebildet wird.

Die Bildung eines Kanalsystems wird insbesondere dadurch begünstigt, dass das weitere Flächengebilde mit den Erhebungen verbunden ist. Auf diese Weise entsteht um die Erhebungen zwischen der Kunststofffolie und dem weiteren Flächengebilde ein Kanalsystem, insbesondere dann, wenn das Flächengebilde in einer Ebene verläuft und nicht der Kontur der ihm zugewandten Ebene der Kunststofffolie folgt.

Das Dichtelement kann zum Abdichten großer Flächen bahnförmig gestaltet sein. Auch eine bandförmige Gestaltung zur Abdichtung schmalerer Bereiche ist in vorteilhafter Weise möglich. Insbesondere dann, wenn das Dichtelement, insbesondere der weitere Bereich bzw. die Kunststofffolie, eine gewisse Biegesteifigkeit aufweist, bietet sich auch die Gestaltung des Dichtelements in Plattenform an.

Dass Dichtelement kann ferner eine auf den Verwendungszweck angepasste Geometrie, insbesondere Geometrie der Randkontur, aufweisen. Auf diese Weise kann das Dichtelement - im Sinne eines Formteils - beispielsweise eine Ecke auskleiden. Auch die Gestaltung des Dichtelements aus einer Mehrzahl von Teilen ist denkbar, wobei diese Teile Dichtelemente der in Rede stehenden Art und/oder andere Funktionselemente sein können. Die Teile können beispielsweise durch Schweißverfahren, insbesondere Ultraschallschweißverfahren oder thermische Schweißverfahren, aneinandergefügt sein.

Die Kunststofffolie kann insbesondere, um dem Dichtelement eine hinreichende Steifigkeit und/oder Festigkeit zu verleihen, mehrschichtig aufgebaut sein. Darüber hinaus können in vorteilhafter Weise Verstärkungselemente in der Kunststofffolie vorgesehen sein, wie eine bewährende Zwischenlage und/ oder Faserverstärkungen.

Bei der erfindungsgemäßen Gebäudestruktur kann das Dichtelement auf die Gebäudestruktur aufgebracht sein, in vorteilhafter Weise ist es jedoch in die Gebäudestruktur integriert. Aufgrund seiner geringen Ausdehnung in Dickenrichtung kann das erfindungsgemäße Dichtelement bevorzugt eine Funktionsschicht im Rahmen eines mehrschichtigen Aufbaus der Gebäudestruktur darstellen. Es kann vorteilhafterweise zwischen den tragenden Bereichen der Gebäudestruktur, beispielsweise einem Mauerwerk, einer Wand aus Beton oder einer Trockenbauwand, und einer die Wand verkleidenden dekorativen Schicht, wie einem Putz oder einer Fliesenauflage, angeordnet sein.

Besonders vorteilhaft lässt sich das erfindungsgemäße Dichtelement als Bestandteil von Gebäudestrukturen einsetzen, an die hohe Anforderungen hinsichtlich ihrer Feuchtigkeits- bzw. Wasserdichtigkeit gestellt werden. In Betracht kommen insbesondere Gebäudestrukturen, die der Witterung ausgesetzt sind sowie Nasszellen und ihre Bestandteile.

Zur Erzeugung der elastischen Reaktionskräfte ist der verdickte Bereich so bemessen, dass er bei der Durchführung des Bauelements durch das Dichtelement zwangsweise eine Verformung erfährt. Dies heißt, dass der Umfang der von dem verdickten Bereich umgebenen Zone des Dichtbereichs geringer ist als der Umfang der Oberfläche des Bauelements, an der der Dichtbereich anliegt.

In einer erfindungsgemäßen Gebäudestruktur wird ein vorteilhaftes Dichtelement mit einem weiteren Bereich insbesondere derart verwendet, dass es eine Schicht zwischen zwei dem Dichtelement benachbarten weiteren Schichten der Gebäudestruktur bildet. Hierbei kann es sich beispielsweise bei einer Schicht um ein Mauerwerk, Betonestrich, eine Trockenbauwand oder dergl. handeln, während die andere Schicht eine dekorative und/oder funktionale Oberfläche der Gebäudestruktur bereitstellt, beispielsweise einen Fußbodenbelag, wie ein Laminat oder ein Fertigparkett, oder eine Fliesenverkleidung.

Auch ist es möglich, das erfindungsgemäße Dichtelement zur Herstellung einer luftdichten erfindungsgemäßen Gebäudestruktur zu nutzen. Diese kann als Bestandteil einer luftdichten Gebäudehülle verwendet werden. Bevorzugt ist es möglich, dass die Vertiefungen in der Kunststofffolie mit einem Material ausgefüllt sind. Ein Ausfüllen der Vertiefungen bedingt, dass die Erhebungen eine Formstabilität erhalten, die es ermöglicht, sie im Sinne kleiner "Stützen" in der Gebäudestruktur zu nutzen. Dies ist insbesondere von Bedeutung, wenn es beispielsweise darum geht, unter einem Fußbodenbelag ein Kanalsystem zur Abfuhr von Feuchtigkeit zu schaffen. Diese kann so durch das mittels des erfindungsgemäßen Dichtelements geschaffene Kanalsystem austreten, während die mechanischen Kräfte, die auf den Fußbodenbelag eingeleitet werden, über die ausgefüllten Erhebungen in die unter dem Dichtelement liegende Fußbodenkonstruktion eingeleitet werden.

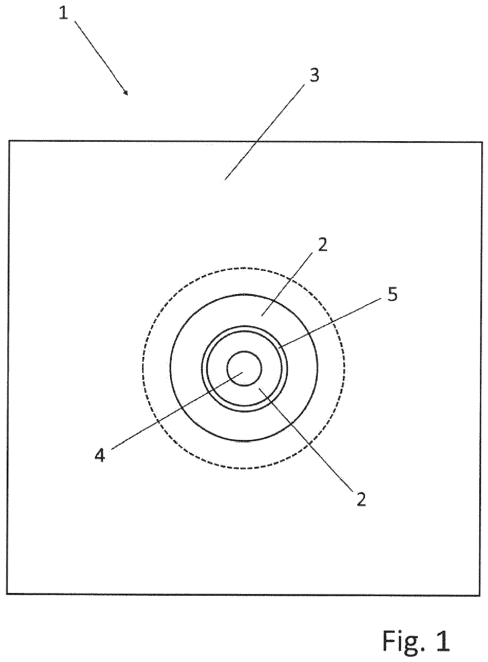

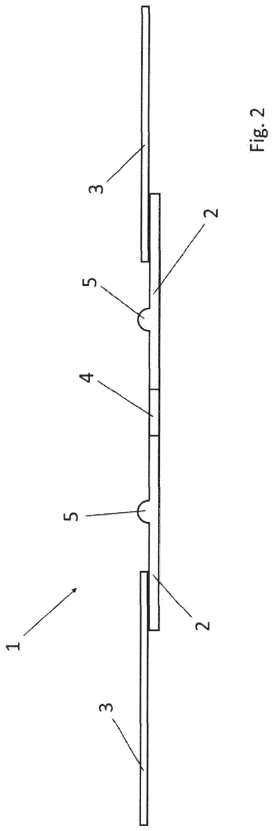

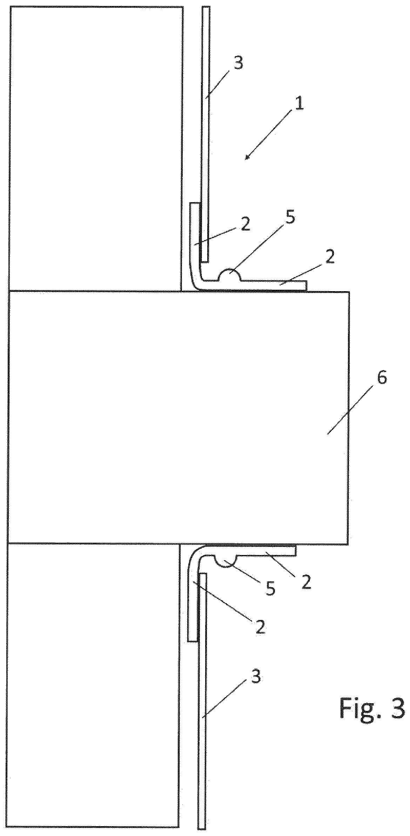

Die Erfindung wird im Folgenden anhand der Figuren 1 bis 3 schematisch näher erläutert.
- Fig. 1: zeigt die schematische Darstellung eines beispielhaften erfindungsgemäßen Dichtelements in einer Draufsicht.
- Fig. 2: zeigt eine schematische Darstellung eines beispielhaften erfindungsgemäßen Dichtelements in einer Querschnittsdarstellung.
- Fig. 3: zeigt ein beispielhaftes erfindungsgemäßes Dichtelement mit einem durch das Dichtelement durchgeführten Bauelement in einer schematischen Darstellung.

Das beispielhafte erfindungsgemäße Dichtelement 1 weist einen Dichtbereich 2 und einen weiteren Bereich 3 auf. Der weitere Bereich 3 umgibt den Dichtbereich 2 und weist einen elastischen Werkstoff auf. Der weitere Bereich 3 und der Dichtbereich 2 sind in vorteilhafter Weise im Bereich einer randseitigen Überlappung des Dichtbereichs 2 mit dem weiteren Bereich 3 miteinander verbunden, bevorzugt verklebt.

Der Dichtbereich 2 weist eine Durchführungszone 4 auf. Diese ist im gezeigten Beispiel in vorteilhafter Weise als Durchbrechung des Dichtbereichs 2 gestaltet. Im gezeigten Beispiel weist die Durchführungszone 4 in vorteilhafter Weise einen kreisrunden Querschnitt auf.

Erfindungsgemäß weist der Dichtbereich 2 nun einen verdickten Bereich 5 auf. Dieser ist im gezeigten Beispiel in vorteilhafter Weise als kreisringförmige Verdickung des Dichtbereichs 2 ausgeführt.

Die erfindungsgemäße Gebäudestruktur weist nun ein Bauelement 6 auf, welches aus der Gebäudestruktur hervortritt. Das Bauelement 6 ist durch die Durchführungszone 4 des Dichtelements 1 hindurchgeführt. Hierdurch wird der Dichtbereich 2 des Dichtelements 1 zumindest zum Teil elastisch verformt. Der verdickte Bereich 5 liegt in dem elastisch verformten Teil des Dichtbereichs 2 und trägt so zur Bildung der elastischen Reaktionskräfte bei, welche den Dichtbereich 2 an die Oberfläche des Bauelements 6 andrücken. Im gezeigten Beispiel ist der Umfang des Bauelements 6 in vorteilhafter Weise größer gewählt als der Umfang des verdickten Bereichs 5. Dies führt - verglichen mit entsprechenden Dichtelementen nach dem Stand der Technik - zu einer erhöhten Andruckkraft des Dichtbereichs 2 an die Oberfläche des Bauelements 6 und damit zu einer verbesserten Abdichtung.

### Bezugszeichenliste

- 1: Dichtelement
- 2: Dichtbereich
- 3: weiterer Bereich
- 4: Durchführungszone
- 5: verdickter Bereich
- 6: Bauelement

## Patentansprüche

1. Dichtelement (1), zum Abdichten einer Gebäudestruktur, insbesondere einer Wand, im Bereich der Oberfläche eines aus einer Gebäudestruktur, hervortretenden Bauelements (6), insbesondere eines Rohres, wobei das Dichtelement (1) zumindest im Wesentlichen flächig ausgebildet ist und einen Dichtbereich (2) zur Anlage an dem Bauelement (6) aus einem elastischen Werkstoff aufweist, wobei der Dichtbereich (2) eine Durchführungszone (4) zur Durchführung des Bauelements (6) durch das Dichtelement (2) aufweist, wobei der Dichtbereich (2) einen verdickten Bereich (5) aufweist, der die Durchführungszone (4) umgibt, wobei der verdickte Bereich so bemessen ist, dass er bei der Durchführung des Bauelements (6) durch das Dichtelement (2) zwangsweise eine Verformung erfährt,
**dadurch gekennzeichnet,**
**dass** der Dichtbereich eine von dem verdickten Bereich umgebene Zone aufweist, wobei der Umfang der von dem verdickten Bereich umgebenen Zone des Dichtbereichs geringer ist als der Umfang der Oberfläche des Bauelements, an der der Dichtbereich anliegt.

2. Dichtelement (1) nach Anspruch 1, **dadurch gekennzeichnet, dass** die Durchführungszone (4) eine Öffnung zur Durchführung des Bauelements (6) durch das Dichtelement (1) aufweist.

3. Dichtelement (1) nach Anspruch 1 oder 2, **dadurch gekennzeichnet, dass** der elastische Werkstoff eine Shore A Härte von wenigstens 35 und/oder höchstens 85 aufweist.

4. Dichtelement (1) nach einem der vorigen Ansprüche, **dadurch gekennzeichnet, dass** der elastische Werkstoff ein Elastomer und/oder ein thermoplastischer Werkstoff ist.

5. Dichtelement (1) nach einem der vorigen Ansprüche, **dadurch gekennzeichnet, dass** der Dichtbereich (2) in einem Spritzgussverfahren hergestellt ist.

6. Dichtelement (1) nach einem der vorigen Ansprüche, **dadurch gekennzeichnet, dass** der verdickte Bereich (5), zumindest im Wesentlichen, kreis- und/oder ringförmig gestaltet ist.

7. Dichtelement (1) nach einem der vorigen Ansprüche, **dadurch gekennzeichnet, dass** der Dichtbereich (2) von einem weiteren flächigen Bereich (3) des Dichtelements (1) umgeben ist.

8. Dichtelement (1) nach Anspruch 7, **dadurch gekennzeichnet, dass** der weitere Bereich (3) eine Kunststofffolie, insbesondere eine Polyolefinfolie aufweist.

9. Dichtelement (1) nach Anspruch 8, **dadurch gekennzeichnet, dass** die Kunststofffolie zumindest auf einer Seite, vorzugsweise auf beiden Seiten, mit einem Haftvermittler beschichtet ist.

10. Dichtelement (1) nach Anspruch 9, **dadurch gekennzeichnet, dass** der Haftvermittler ein wasserbasierter Haftvermittler ist und/oder Kieselsäure enthält.

11. Dichtelement (1) nach einem der Ansprüche 8 bis 10, **dadurch gekennzeichnet, dass** zumindest auf einer Seite der Kunststofffolie, vorzugsweise auf beiden Seiten der Kunststofffolie, ein textiles Flächengebilde, insbesondere ein Vlies, aufgebracht ist.

12. Dichtelement (1) nach einem der Ansprüche 8 bis 11, **dadurch gekennzeichnet, dass** die Kunststofffolie vor dem Beschichten mit dem Haftvermittler einer Koronabehandlung unterzogen worden ist.

13. Gebäudestruktur, insbesondere Wand, mit einem aus der Gebäudestruktur hervortretendem Bauelement (6), insbesondere einem Rohr, und einem Dichtelement (1) nach einem der vorigen Ansprüche, wobei das Dichtelement (1) flächig auf oder in der Gebäudestruktur angeordnet ist und das Bauelement (6) im Bereich der Durchführungszone (4) durch das Dichtelement (1) hindurchgeführt ist, wobei das Dichtelement (1) umfangsseitig an der Oberfläche des Bauelements (6) anliegt, wobei das Dichtelement (1), insbesondere der Dichtbereich (2), durch das durch die Durchführungszone (4) geführte Bauelement (6) elastisch verformt ist, wodurch das Dichtelement (1) durch seine elastische Reaktionskraft an die Oberfläche des Bauelements (6) angedrückt wird,
**dadurch gekennzeichnet,**
**dass** zumindest ein Teil dieser elastischen Reaktionskraft auf der elastischen Verformung des verdickten Bereiches (5) beruht.

14. Gebäudestruktur nach Anspruch 13, **dadurch gekennzeichnet, dass** das Bauelement (6) und der verdickte Bereich (5) derart gestaltet, insbesondere bemessen, sind, dass der verdickte Bereich (5) durch das durch das Dichtelement (1) hindurchgeführte Bauelement (6) eine elastische Verformung erfährt.

15. Gebäudestruktur nach Anspruch 13 oder 14, **dadurch gekennzeichnet, dass** der Umfang der Oberfläche des Bauelements (6), an der der Dichtbereich (2) anliegt, größer ist, als der Umfang der von dem verdickten Bereich (5) eingeschlossenen Zone des Dichtbereichs (2).

## Claims

1. Sealing element (1) for sealing a building structure, in particular a wall, in the area of the surface of a structural element (6), in particular a pipe, protruding from a building structure, wherein the sealing element (1) is formed at least substantially planar and has a sealing zone (2) made of an elastic material for abutment against the structural element (6), wherein the sealing zone (2) has a pass through zone (4) for guiding the structural element (6) through the sealing element (2), wherein the sealing zone (2) has a thickened portion (5) surrounding the pass through zone (4), wherein the thickened portion is dimensioned such that, when the structural element (6) is guided through the sealing element (2), it is forcibly subjected to a deformation,
**characterized in that**
the sealing zone has a zone surrounded by the thickened portion, wherein the perimeter of the zone of the sealing zone surrounded by the thickened portion is smaller than the perimeter of the surface of the structural element against which the sealing zone abuts.

2. Sealing element (1) according to claim 1, **characterized in that** the pass through zone (4) has an aperture for guiding the structural element (6) through the sealing element (1).

3. Sealing element (1) according to claim 1 or 2, **characterized in that** the elastic material has a shore A hardness of at least 35 and/or at most 85.

4. Sealing element (1) according to one of the preceding claims, **characterized in that** the elastic material is an elastomer and/or a thermoplastic material.

5. Sealing element (1) according to one of the preceding claims, **characterized in that** the sealing zone (2) is manufactured in an injection moulding process.

6. Sealing element (1) according to one of the preceding claims, **characterized in that** the thickened portion (5) is designed to have an at least substantially circular or annular shape.

7. Sealing element (1) according to one of the preceding claims, **characterized in that** the sealing zone (2) is surrounded by a further planar zone (3) of the sealing element (1).

8. Sealing element (1) according to claim 7, **characterized in that** the further planar zone (3) has a plastic foil, in particular a polyolefin foil.

9. Sealing element (1) according to claim 8, **characterized in that** the plastic foil is coated with an adhesion promoter at least on one side, preferably on both sides.

10. Sealing element (1) according to claim 9, **characterized in that** the adhesion promoter is a water-based adhesion promoter and/or contains silicic acid.

11. Sealing element (1) according to one of claims 8 to 10, **characterized in that** a textile fabric, in particular a non-woven, is applied at least to one side of the plastic foil, preferably to both sides of the plastic foil.

12. Sealing element (1) according to one of claims 8 to 11, **characterized in that** the plastic foil has been subjected to a corona treatment before being coated with the adhesion promoter.

13. Building structure, in particular a wall, having a structural element (6), in particular a pipe, protruding from the building structure and a sealing element (1) according to one of the preceding claims, wherein the sealing element (1) is arranged in a planar manner on or in the building structure and the structural element (6) is guided through the sealing element (1) in the area of the pass through zone (4), wherein the sealing element (1) peripherally abuts against the surface of the structural element (6), wherein the sealing element (1), in particular the sealing zone (2), is elastically deformed by the structural element (6) guided through the pass through zone (4), whereby the sealing element (1) is pressed against the surface of the structural element (6) due to its elastic reaction force,
**characterized in that**
at least part of said elastic reaction force results from the elastic deformation of the thickened portion (5).

14. Building structure according to claim 13, **characterized in that** the structural element (6) and the thickened portion (5) are designed, in particular dimensioned, such that the thickened portion (5) is subjected to an elastic deformation by the structural element (6) guided through the sealing element (1).

15. Building structure according to claim 13 or 14, **characterized in that** the perimeter of the surface of the structural element (6) against which the sealing zone (2) abuts is larger than the perimeter of the zone of the sealing zone (2) surrounded by the thickened portion (5).

## Revendications

1. Élément d'étanchéité (1) pour étanchéifier une structure de bâtiment, en particulier un mur, dans la région de la surface d'un élément de construction (6), en particulier d'un tuyau, faisant saillie à partir d'une structure de bâtiment, où l'élément d'étanchéité (1) est formé au moins sensiblement plat et présente une région d'étanchéité (2) à appliquer contre l'élément de construction (6) en un matériau élastique, où la région d'étanchéité (2) présente une zone de passage (4) pour le passage de l'élément de construction (6) à travers l'élément d'étanchéité (2), où la région d'étanchéité (2) présente une région épaissie (5) qui entoure la zone de passage (4), où la région épaissie est dimensionnée de manière à subir une déformation forcée lors du passage de l'élément de construction (6) à travers l'élément d'étanchéité (2),
**caractérisé en ce que**
la région d'étanchéité présente une zone entourée par la région épaissie, la circonférence de la zone de la région d'étanchéité entourée par la région épaissie étant plus petite que la circonférence de la surface de l'élément de construction sur laquelle la région d'étanchéité repose.

2. Élément d'étanchéité (1) selon la revendication 1, **caractérisé en ce que** la zone de passage (4) présente une ouverture pour le passage de l'élément de construction (6) à travers l'élément d'étanchéité (1).

3. Élément d'étanchéité (1) selon la revendication 1 ou 2, **caractérisé en ce que** le matériau élastique présente une dureté Shore A d'au moins 35 et/ou d'au plus 85.

4. Élément d'étanchéité (1) selon l'une quelconque des revendications précédentes, **caractérisé en ce que** le matériau élastique est un élastomère et/ou un matériau thermoplastique.

5. Élément d'étanchéité (1) selon l'une quelconque des revendications précédentes, **caractérisé en ce que** la région d'étanchéité (2) est réalisée par un procédé de moulage par injection.

6. Élément d'étanchéité (1) selon l'une quelconque des revendications précédentes, **caractérisé en ce que** la région épaissie (5) est au moins sensiblement circulaire et/ou annulaire.

7. Élément d'étanchéité (1) selon l'une quelconque des revendications précédentes, **caractérisé en ce que** la région d'étanchéité (2) est entourée par une région plane supplémentaire (3) de l'élément d'étanchéité (1).

8. Élément d'étanchéité (1) selon la revendication 7, **caractérisé en ce que** la région supplémentaire (3) présente un film plastique, en particulier un film de polyoléfine.

9. Élément d'étanchéité (1) selon la revendication 8, **caractérisé en ce que** le film plastique est revêtu d'un adhésif au moins sur une face, de préférence sur les deux faces.

10. Élément d'étanchéité (1) selon la revendication 9, **caractérisé en ce que** l'adhésif est un adhésif à base d'eau et/ou contient de l'acide silicique.

11. Élément d'étanchéité (1) selon l'une quelconque des revendications 8 à 10, **caractérisé en ce qu'**au moins sur une face du film plastique, de préférence sur les deux faces du film plastique, est appliqué un article textile plat, en particulier un textile non tissé.

12. Élément d'étanchéité (1) selon l'une quelconque des revendications 8 à 11, **caractérisé en ce que** le film plastique a été soumis à un traitement à effet corona avant application en revêtement de l'adhésif.

13. Structure de bâtiment, en particulier mur, comprenant un élément de construction (6), en particulier un tuyau, faisant saillie à partir de la structure de bâtiment, et un élément d'étanchéité (1) selon l'une quelconque des revendications précédentes, l'élément d'étanchéité (1) étant disposé à plat sur ou dans la structure de bâtiment et l'élément de construction (6) étant passé à travers l'élément d'étanchéité (1) dans la région de la zone de passage (4), l'élément d'étanchéité (1) prenant appui contre la surface de l'élément de construction (6) du côté périphérique, l'élément d'étanchéité (1), en particulier la région d'étanchéité (2), étant déformé élastiquement par l'élément de construction (6) guidé à travers la zone de passage (4), de sorte que l'élément d'étanchéité (1) est pressé par sa force de réaction élastique contre la surface de l'élément de construction (6),
**caractérisée en ce que**
au moins une partie de cette force de réaction élastique est due à la déformation élastique de la région épaissie (5).

14. Structure de bâtiment selon la revendication 13, **caractérisée en ce que** l'élément de construction (6) et la région épaissie (5) sont conçus, en particulier dimensionnés, de telle sorte que la région épaissie (5) est soumise à une déformation élastique par l'élément de construction (6) traversant l'élément d'étanchéité (1).

15. Structure de bâtiment selon la revendication 13 ou 14, **caractérisée en ce que** la circonférence de la surface de l'élément de construction (6) contre laquelle la région d'étanchéité (2) s'appuie est plus grande que la circonférence de la zone de la région d'étanchéité (2) entourée par la région épaissie (5).
